# EUROPÄISCHE PATENTSCHRIFT

(11) **EP 2 013 007 B1**
(45) Veröffentlichungstag und Bekanntmachung des Hinweises auf die Patenterteilung: **28.10.2009**
(21) Anmeldenummer: 07711801.6
(22) Anmeldetag: 06.03.2007
(51) Int. Cl.: B29D 30/60, B60C 19/08

(54) **VERFAHREN ZUR HERSTELLUNG EINES LAUFSTREIFENS FÜR EINEN FAHRZEUGREIFEN, INSBESONDERE EINES FAHRZEUGLUFTREIFENS**
PROCESS FOR PRODUCTION OF A TREAD FOR A TYRE, IN PARTICULAR OF A PNEUMATIC TYRE
PROCÉDÉ DE PRODUCTION D'UNE BANDE DE ROULEMENT POUR UN PNEU DE VÉHICULE, EN PARTICULIER UN PNEU GONFLABLE

(30) Priorität: 26.04.2006 DE 102006019262
(43) Veröffentlichungstag der Anmeldung: 14.01.2009
(73) Patentinhaber: Continental Aktiengesellschaft, 30165 Hannover (DE)
(72) Erfinder: FRERICHS, Udo, 30855 Langenhagen (DE)
(74) Vertreter: Finger, Karsten
(86) Internationale Anmeldenummer: PCT/EP2007/001893
(87) Internationale Veröffentlichungsnummer: WO 2007/124810

(56) Entgegenhaltungen:
- EP-A- 1 629 964
- EP-A- 1 632 367
- EP-A- 1 645 442
- EP-B1- 1 175 992

## Beschreibung

Die Erfindung betrifft ein Verfahren zur Herstellung eines Laufstreifens für einen Fahrzeugreifen - insbesondere eines Fahrzeugluftreifens - , mit einer radial inneren Schicht aus einem ersten Gummimaterial und mit einer radial äußeren die Bodenkontaktfläche des Fahrzeugluftreifens bildenden zweiten Schicht aus einem zweiten Gummimaterial, wobei das erste Gummimaterial insbesondere eine höhere elektrische Leitfähigkeit aufweist als das zweite Gummimaterial, und wobei sich das erste Gummimaterial in Form eines über den Umfang des Fahrzeugluftreifens erstreckten die zweite Schicht axial teilenden Steges radial nach außen durch die zweite Schicht hindurch bis zur Bodenkontaktfläche erstreckt, sowie einen Laufstreifen eines Fahrzeugreifens - insbesondere eines Fahrzeugluftreifens - , mit einer radial inneren Schicht aus einem ersten Gummimaterial und mit einer radial äußeren die Bodenkontaktfläche des Fahrzeugluftreifens bildenden zweiten Schicht aus einem zweiten Gummimaterial, wobei das erste Gummimaterial insbesondere eine höhere elektrische Leitfähigkeit aufweist als das zweite Gummimaterial, und wobei sich das erste Gummimaterial in Form eines über den Umfang des Fahrzeugluftreifens erstreckten die zweite Schicht axial teilenden Steges radial nach außen durch die zweite Schicht hindurch bis zur Bodenkontaktfläche erstreckt.

Ein Verfahren zur Herstellung eines derartigen Fahrzeugluftreifens ist beispielsweise aus der EP 1 175 992 B1 bekannt. Bei diesem Verfahren wird eine elektrisch leitfähige Schicht axial innerhalb eines Teilabschnitts einer ersten aus einer Cap-Mischung ausgebildeten radial äußeren Gummischicht ausgebildet, wobei sich die elektrisch leitfähige Schicht ausgehend von der radial innerhalb der äußeren Gummischicht ausgebildeten zweiten Gummischicht, die aus einer Base-Mischung ausgebildet ist, als im Querschnitt schmaler Steg nach radial außen bis zur Bodenkontaktfläche der Lauffläche erstreckt. Die den schmalen Steg bildende Schicht, wird dadurch erzeugt, dass ein schmaler bandförmiger Kautschukstreifen in einem eigenständigen Fertigungsdurchgang um die bereits aufgebaute zweite Kautschukschicht in mehreren radial übereinander angeordneten Windungen aufgewickelt wird. Die deckungsgleich aufeinander liegenden Windungen des bandförmigen Kautschukstreifens sind jeweils mit gleicher axialer Breite ausgebildet. Anschließend wird das Kautschukmaterial zur Bildung der ersten Gummischicht nacheinander beiderseits des Steges aufgebaut, wobei eine sichere Verbindung zwischen Steg und Kautschukmaterial zur Bildung der ersten Gummischicht ohne Bildung von Lufteinschlüssen mit erzeugt werden muss. Hierzu sind ausreichend hohe Presskräfte erforderlich. Damit der Steg hierbei nicht unzulässig aus seiner Position kippen kann muss das Kautschukband möglichst breit ausgebildet werden. Eine breite Ausbildung reduziert jedoch die für die Fahreigenschaften wichtige Kontaktfläche der ersten aus der Cap-Mischung ausgebildeten Gummischicht des Fahrzeugreifens zur Fahrbahnoberfläche.

Der Erfindung liegt daher die Aufgabe zugrunde, eine einfache sichere Herstellung eines Fahrzeugreifen - insbesondere eines Fahrzeugluftreifens - , mit einem Laufstreifen mit einer radial inneren Schicht aus einem ersten Gummimaterial und mit einer radial äußeren die Bodenkontaktfläche des Fahrzeugluftreifens bildenden zweiten Schicht aus einem zweiten Gummimaterial, wobei das erste Gummimaterial insbesondere eine höhere elektrische Leitfähigkeit aufweist als das zweite Gummimaterial, und wobei sich das erste Gummimaterial in Form eines über den Umfang des Fahrzeugluftreifens erstreckten die zweite Schicht axial teilenden Steges radial nach außen durch die zweite Schicht hindurch bis zur Bodenkontaktfläche erstreckt, zu ermöglichen, bei der trotz guter Verbindung zwischen der zweiten Gummischicht und Fahrbahnkontaktoberfläche die Fahreigenschaften optimiert ausgelegt werden können.

Erfindungsgemäß wird die Aufgabe durch das Verfahren zur Herstellung eines Laufstreifens für einen Fahrzeugreifen - insbesondere eines Fahrzeugluftreifens - , mit einer radial inneren Schicht aus einem ersten Gummimaterial und mit einer radial äußeren die Bodenkontaktfläche des Fahrzeugluftreifens bildenden zweiten Schicht aus einem zweiten Gummimaterial, wobei das erste Gummimaterial insbesondere eine höhere elektrische Leitfähigkeit aufweist als das zweite Gummimaterial, und wobei sich das erste Gummimaterial in Form eines über den Umfang des Fahrzeugluftreifens erstreckten die zweite Schicht axial teilenden Steges radial nach außen durch die zweite Schicht hindurch bis zur Bodenkontaktfläche erstreckt, gemäß den Merkmalen von Anspruch 1 gelöst, bei dem auf eine rotationssymmetrische Aufbaufläche auf einer der beiden axialen Seiten des auszubildenden Steges eine Lage der ersten Schicht aus einem ersten Kautschukmaterial und die zweite Schicht aus einem zweiten Kautschukmaterial jeweils in einem ersten axialen Erstreckungsbereich, der bis zur Position des Steges reicht, radial aufeinander aufgebaut werden, bei dem von der anderen axialen Seite des auszubildenden Steges aus in einem zweiten axialen Erstreckungsbereich durch schraubenförmiges Aufwickeln eines bandförmigen Kautschukstreifens aus dem ersten Kautschukmaterial mit mehreren axial nebeneinander oder zumindest zum Teil axial überlappt angeordneten Windungen um die Rotationsachse bis an die bereits im ersten axialen Erstreckungsbereich ausgebildete Lage der ersten Schicht heran die Lage der ersten Schicht in axialer Richtung geschlossen wird, wobei bei Erreichen der im axialen Erstreckungsbereich ausgebildeten Lage der ersten Schicht, der bandförmige Kautschukstreifen weiter in Berührkontakt zur axialen Stirnfläche zunächst der im ersten Erstreckungsbereich ausgebildeten Lage der ersten Schicht und dann der zweiten Schicht mit mehreren Windungen zur Ausbildung des Steges schrauben- und/oder spiralförmig um die Rotationsachse nach radial außen bis zur Einhüllenden des aufzubauenden Laufstreifens gewickelt wird, und bei dem im zweiten axialen Erstreckungsbereich die zweite Schicht aus dem zweiten Kautschukmaterial axial bis zum Steg aufgebaut wird.

Unabhängig davon wird die Aufgabe erfindungsgemäß durch die Ausbildung eines Laufstreifen eines Fahrzeugreifens - insbesondere eines Fahrzeugluftreifens -, mit einer radial inneren Schicht aus einem ersten Gummimaterial und mit einer radial äußeren die Bodenkontaktfläche des Fahrzeugluftreifens bildenden zweiten Schicht aus einem zweiten Gummimaterial, wobei das erste Gummimaterial insbesondere eine höhere elektrische Leitfähigkeit aufweist als das zweite Gummimaterial, und wobei sich das erste Gummimaterial in Form eines über den Umfang des Fahrzeugluftreifens erstreckten die zweite Schicht axial teilenden Steges radial nach außen durch die zweite Schicht hindurch bis zur Bodenkontaktfläche erstreckt, gemäß den Merkmalen von Anspruch 6 gelöst, bei dem auf einer der beiden axialen Seiten des Steges eine Lage der ersten Schicht aus einem ersten Kautschukmaterial und die zweite Schicht aus einem zweiten Kautschukmaterial jeweils in einem ersten axialen Erstreckungsbereich, der bis zur Position des Steges reicht, radial aufeinander ausgebildet sind, und bei dem von der anderen axialen Seite des Steges aus in einem zweiten axialen Erstreckungsbereich ein ununterbrochener, bandförmiger Gummistreifen aus dem ersten Gummimaterial mit mehreren axial nebeneinander oder zumindest zum Teil axial überlappt angeordneten Windungen schraubenförmig um die Rotationsachse des Fahrzeugreifens bis an die bereits im ersten axialen Erstreckungsbereich ausgebildete Lage der ersten Schicht heran erstreckt ist, wodurch die Lage der ersten Schicht in axialer Richtung geschlossen ausgebildet ist, und in unterbrochener Weiterführung des bandförmigen Gummistreifens von radial innen nach radial außen in Berührkontakt zur axialen Stirnfläche der im ersten Erstreckungsbereich ausgebildeten Lage der ersten Schicht und der zweiten Schicht mit mehreren schrauben- und/oder spiralförmig ausgebildeten Windungen des bandförmigen Gummistreifens um die Rotationsachse des Fahrzeugluftreifens der Steg ausgebildet ist

Auf diese Weise kann mit nur wenigen Arbeitsschritten der Laufstreifen mit Steg mit hoher Genauigkeit hergestellt werden. Der Steg wird in einem Arbeitsgang mit einem Teil der Lage der ersten Schicht genau platziert und an dem bereits aufgebauten Teil der ersten und zweiten Schicht entlang gestützt aufgebaut. Der Steg kann hierdurch sicher gestützt und dennoch schmal ausgebildet werden, so dass eine stabile genau definierte Positionierung im Laufstreifen während der Herstellung mit einer schmalen Kontaktfläche zur Fahrbahnoberfläche ermöglicht wird.

Besonders vorteilhaft ist das Verfahren gemäß den Merkmalen von Anspruch 2, wobei auch die Lage der ersten Schicht im ersten axialen Erstreckungsbereich durch schraubenförmiges Aufwickeln eines bandförmigen Kautschukstreifens aus dem ersten Kautschukmaterial mit mehreren axial nebeneinander oder zumindest zum Teil axial überlappt angeordneten Windungen um die Rotationsachse aufgebaut wird. Dadurch kann ein fest verzahnter Lagenverband bewirkt und gleichzeitig ökonomisch das jeweils erforderliche Volumen des Verbandes an den jeweils betreffenden Stellen aufgebaut werden.

Besonders vorteilhaft ist das Verfahren gemäß den Merkmalen von Anspruch 3, wobei auch die zweite Schicht im ersten axialen Erstreckungsbereich durch schraubenförmiges Aufwickeln eines bandförmigen Kautschukstreifens aus dem ersten Kautschukmaterial mit mehreren axial nebeneinander oder zumindest zum Teil axial überlappt angeordneten Windungen um die Rotationsachse aufgebaut wird. Dadurch kann ein fest verzahnter Lagenverband bewirkt und gleichzeitig ökonomisch das jeweils erforderliche Volumen des Verbandes an den jeweils betreffenden Stellen aufgebaut werden.

Besonders vorteilhaft ist das Verfahren gemäß den Merkmalen von Anspruch 4, wobei auch die zweite Schicht im zweiten axialen Erstreckungsbereich durch schraubenförmiges Aufwickeln eines bandförmigen Kautschukstreifens aus dem ersten Kautschukmaterial mit mehreren axial nebeneinander oder zumindest zum Teil axial überlappt angeordneten Windungen um die Rotationsachse aufgebaut wird. Dadurch kann ein fest verzahnter Lagenverband bewirkt und gleichzeitig ökonomisch das jeweils erforderliche Volumen des Verbandes an den jeweils betreffenden Stellen aufgebaut werden.

Besonders vorteilhaft ist das Verfahren gemäß den Merkmalen von Anspruch 5, wobei die Lage der erste Schicht, auf die die zweite Schicht aufgebaut wird, die radial äußere Lage einer mehrlagig -insbesondere zweilagig- aufgebauten ersten Schicht aus dem ersten Kautschukmaterial ist, wobei insbesondere die radial innerhalb der radial äußeren Lage ausgebildete Lage der ersten Schicht durch schraubenförmiges Aufwickeln des bandförmigen Kautschukstreifens aus dem ersten Kautschukmaterial mit mehreren axial nebeneinander oder zumindest zum Teil axial überlappt angeordneten Windungen um die Rotationsachse aufgebaut wird und danach die radial äußere Lage in dem ersten axialen Erstreckungsbereich. Dadurch kann ein fest verzahnter Lagenverband bewirkt und gleichzeitig ökonomisch das jeweils erforderliche Volumen des Verbandes an den jeweils betreffenden Stellen aufgebaut werden.

Die Erfindung wird im Folgenden an Hand der in den Fig. 1 bis 10 schematisch dargestellten Ausführungsbeispiele näher erläutert. Hierin zeigen
- Fig. 1: Fahrzeugluftreifen in Querschnittsdarstellung,
- Fig. 2: Schematische Darstellung einer Station zur Bespulung eines Reifenrohlings mit streifenförmigem Kautschukmaterial mit auf einer Trommel aufgebautem Reifenrohling und einem Spulkopf,
- Fig. 3: Schematische Schnittdarstellung des Spulkopfs,
- Fig. 4: Vereinfachte schematische Darstellung des Spulkopfes mit in Fig. 3a bis Fig. 3g dargestellten Verfahrensschritten zur Erläuterung der Zufuhr und des Ablängens von Kautschukmaterial,
- Fig. 5: Darstellung des Aufspulprozesses eines Kautschukstreifens zur Erzeugung einer Reifenseitenwand und zur Erzeugung eines Laufstreifens,
- Fig. 6a bis 6c: Erläuterung des Spulprozesses zur Herstellung eines Laufstreifens mit Steg in einer ersten Ausführung in Querschnittsdarstellung des Laufstreifens an Hand eines Ausführungsbeispiels mit einlagig ausgebildeter Base und einlagig ausgebildeter Cap,
- Fig. 7: Erläuterung des Spulprozesses zur Herstellung eines Laufstreifens mit Steg in einer zweiten Ausführung in Querschnittsdarstellung des Laufstreifens an Hand eines Ausführungsbeispiels mit zweilagig ausgebildeter Base und einlagig ausgebildeter Cap,
- Fig. 8: Erläuterung des Spulprozesses zur Herstellung eines Laufstreifens mit Steg in einer dritten Ausführung in Querschnittsdarstellung des Laufstreifens an Hand eines Ausführungsbeispiels mit zweilagig ausgebildeter Base und zweilagig ausgebildeter Cap,
- Fig. 9: Darstellung zur Erläuterung der Ausformung eines Steges in alternativer Kipplage des gespulten Kautschukbandes,
- Fig.10a: Querschnittsdarstellung eines auf einem expandierten Bombierbalg aufgebauten Reifenrohlings zur Erläuterung der Aufbau des Laufstreifens,
- Fig.10b: Querschnittsdarstellung eines auf einem torusförmigen Kern aufgebauten Reifenrohlings zur Erläuterung der Aufbau des Laufstreifens,
- Fig.10c: Querschnittsdarstellung eines auf einer im Wesentlichen zylindrischen Aufbautrommel aufgebauten Gürtelpakets zur Erläuterung des Aufbaus des Laufstreifens.

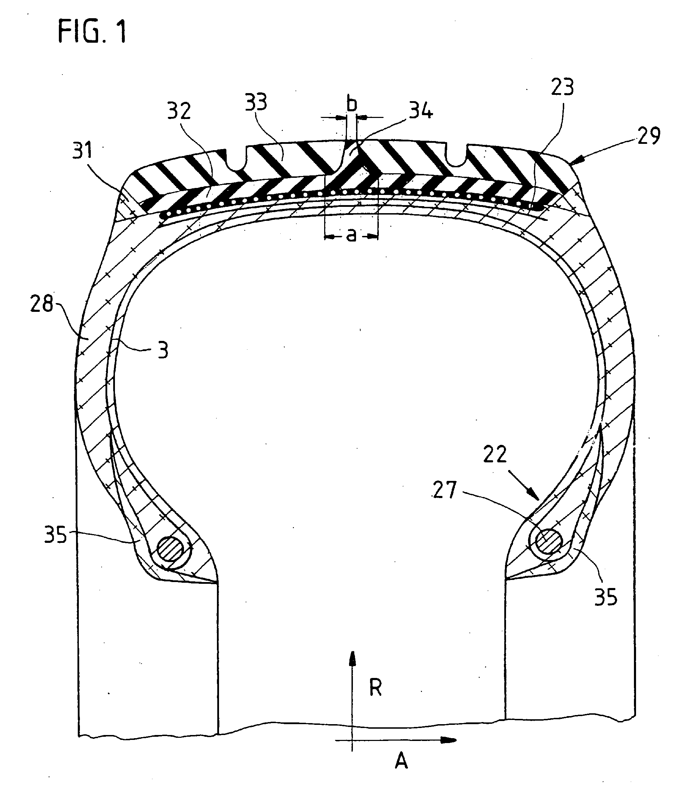

In Fig. 1 ist der Aufbau eines Fahrzeugluftreifens beispielhaft dargestellt, bei dem in einem zur Befestigung des Fahrzeugluftreifens auf einer Felge ausgebildeten rechten Wulstbereich 22 um einen Wulstkern 27 mit nicht näher dargestelltem Kernprofil eine erste Karkassenlage einer Karkasse 3 radialer Bauart außerhalb einer luftundurchlässigen Innenschicht über den rechten Schulterbereich und die Zenitebene zu dem linken Schulterbereich und den im linken Wulstbereich 22 ausgebildeten Wulstkern 27 mit Kernprofil reicht, um den sie in herkömmlicher Weise gelegt ist. Über der ersten Karkassenlage ist in herkömmlicher Weise eine zweite Karkassenlage der Karkasse 3 gelegt, die sich ebenfalls von der in Fig.1 rechts dargestellten Seite des Reifens bis zur links dargestellten Seite erstreckt. In herkömmlicher Weise ist im Wulstbereich 22 ein nicht näher dargestellte Wulststreifen bekannter Art, ein nicht näher dargestellten Wulstverstärker bekannter Art und ein Homprofil 35 ausgebildet und von dem Homprofil 35 ausgehend bis in den Schulterbereich reichend ein Seitenwandgummimaterial 28 aufgelegt. Über den Umfang des Reifens reichen außerhalb der Karkassenlagen radiale Bauart angeordnet mehrere Gürtellagen eines Gürtels 23 mit in Kautschuk eingebetteten Stahlkorden. Auf den Gürtellagen des Gürtels 23, zwischen den Gürtellagen 23 und dem Laufstreifen 29 ist zusätzlich eine nicht dargestellte Bandagelage bekannter Art des Gürtels 23 mit in Umfangsrichtung ausgerichteten Festigkeitsträgern ausgebildet. Im Schulterstreifen sind in bekannter Weise zusätzlich Schulterstreifen 31 aufgelegt. Den Abschluss des Reifenaufbaus bildet in bekannter Weise ein profilierter Laufstreifen 29.

Der Laufstreifen 29 ist in bekannter Weise aus einer radial äußeren Gummilage (Cap) 33 und einer radial inneren Gummilage (Base) 32 aufgebaut.

Die Lagendicke der radial inneren Gummilage (Base) 15 beträgt wenigstens 0,6 mm, beispielsweise beträgt sie 2 bis 3 mm.

Die radial äußere Gummilage (Cap) 33 ist in bekannter Weise mit einer für eine Cap geeignete Laufstreifenmischung mit hohem Anteil an Silica (Kieselerde) und somit mit relativ geringer elektrischer Leitfähigkeit ausgebildet. Die radial innere Gummilage (Base) 32 ist in bekannter Weise mit einer für eine Base geeignete Laufstreifenmischung mit hohem Anteil an Ruß und somit mit gegenüber der für die Cap verwendeten Laufstreifenmischung relativ hoher elektrischer Leitfähigkeit ausgebildet.

Wie in Fig. 1 dargestellt ist, ist zur Reduzierung der Gefahren von elektrostatischen Aufladungen, die beim Fahren auftreten können, ein über den gesamten Umfang des Fahrzeugluftreifens erstreckter Steg 34 der sich radial von der radial inneren Gummilage (Base) 32 durch die radial äußere Gummilage (Cap) 33 bis zur radial äußeren, die Kontaktfläche zur Straßenoberfläche bildenden Mantelfläche des Fahrzeugluftreifens erstreckt. Der Steg 34 ist aus der gleichen Laufstreifenmischung mit hohem Anteil an Ruß und somit mit gegenüber der für die Cap verwendeten Laufstreifenmischung relativ hoher elektrischer Leitfähigkeit ausgebildet, aus der die radial innere Gummilage (Base) 32 ausgebildet ist. Der Steg 34 erstreckt sich in axialer Richtung A des Fahrzeugluftreifens in seiner Schnittebene mit der radial äußeren Mantelfläche der radial inneren Gummilage (Base) 32 über eine Erstreckungslänge a und nimmt in seiner axialen Erstreckung längs seiner radialen Erstreckung nach außen stetig ab und erreicht in der Schnittebene mit der radial äußeren, die Kontaktfläche zur Straßenoberfläche bildenden Mantelfläche des Fahrzeugluftreifens eine axiale Erstreckung über eine Erstreckungslänge b, wobei b < a.

Der Querschnitt des Steges in einer in Fig. 1 dargestellten Schnittebene, die die Achse des Fahrzeugluftreifens beinhaltet, hat in einer Ausführung einen Konturverlauf mit einem längs seiner radialen Erstreckung von radial innen nach radial außen ausgebildeten degressiv abnehmenden Verlauf des Maßes seiner axialen Erstreckung.

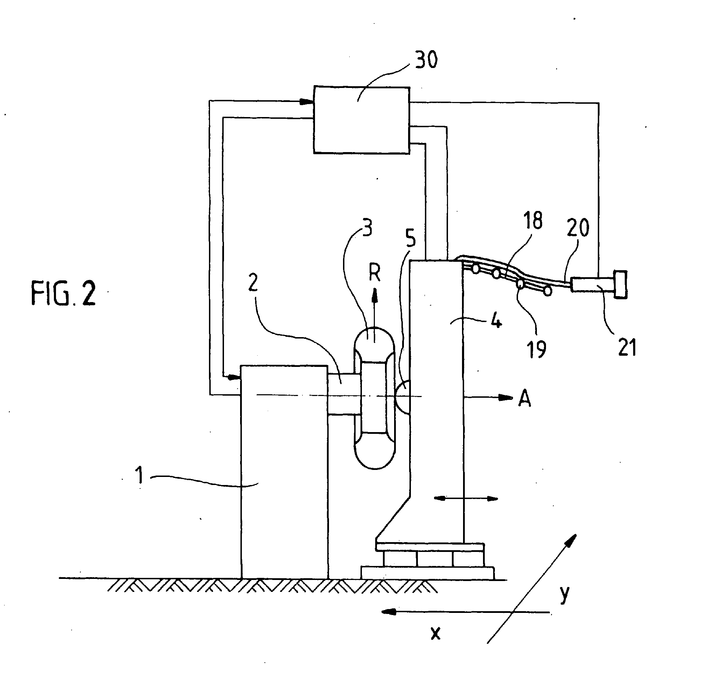

Zur Herstellung des Fahrzeugluftreifens wird ein unvulkaniserter Reifenrohling ohne Laufstreifen - wie in Fig. 2 dargestellt - auf einem in einem Gestell 1 drehbar gelagerten und über eine Steuereinheit 30 rotatorisch gesteuert angetriebenen Spannkopf 2 koaxial zum Spannkopf 2 aufgebaut und befestigt.

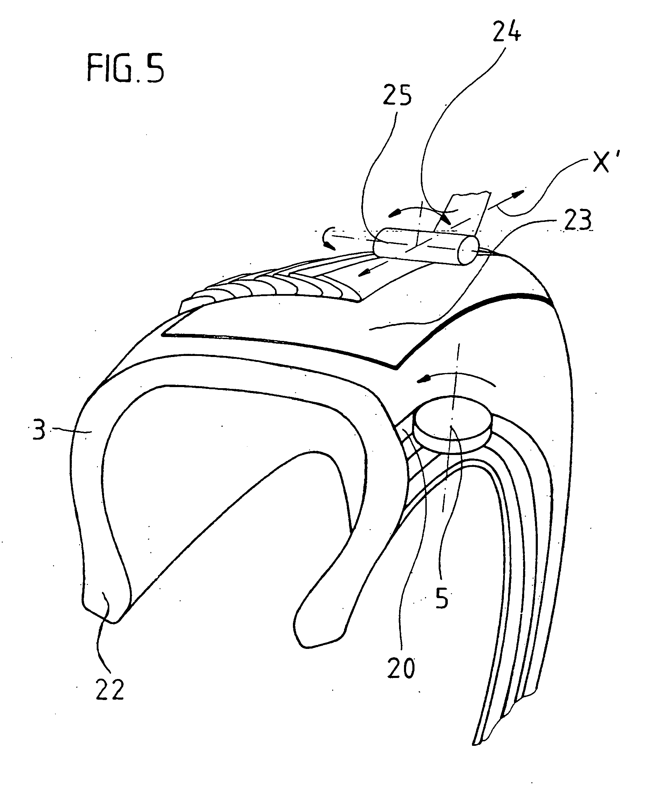

Der Reifenrohling besteht - wie in Fig. 5 dargestellt - aus der in herkömmlicher Weise ausgebildeten Karkasse 3 aus einer oder mehreren nicht dargestellten Lagen von in Kautschuk eingebetteten Festigkeitsträgern, die sich von Wulstbereich 22 zu Wulstbereich 22 des Reifenrohlings axial erstrecken und dort jeweils um den zur Vereinfachung nicht näher dargestellten Wulstkern mit darauf aufgebautem Kernreiter umgeschlagen sind. In herkömmlicher Weise ist im Wulstbereich 22 ein nicht näher dargestellte Wulststreifen bekannter Art, ein nicht näher dargestellten Wulstverstärker bekannter Art und ein in Fig. 5 zur Vereinfachung nicht dargestelltes Hornprofil ausgebildet. Über den Umfang des Reifens reichen außerhalb der Karkassenlagen radialer Bauart angeordnet ein Gürtel 23 mit mehreren in Fig. 5 zur Vereinfachung nicht dargestellte Gürtellagen und einer oder mehreren darauf aufgebaute Bandagelagen.

Der Reifenrohling ist torusförmig ausgebildet und auf dem Spannkopf 2 befestigt.

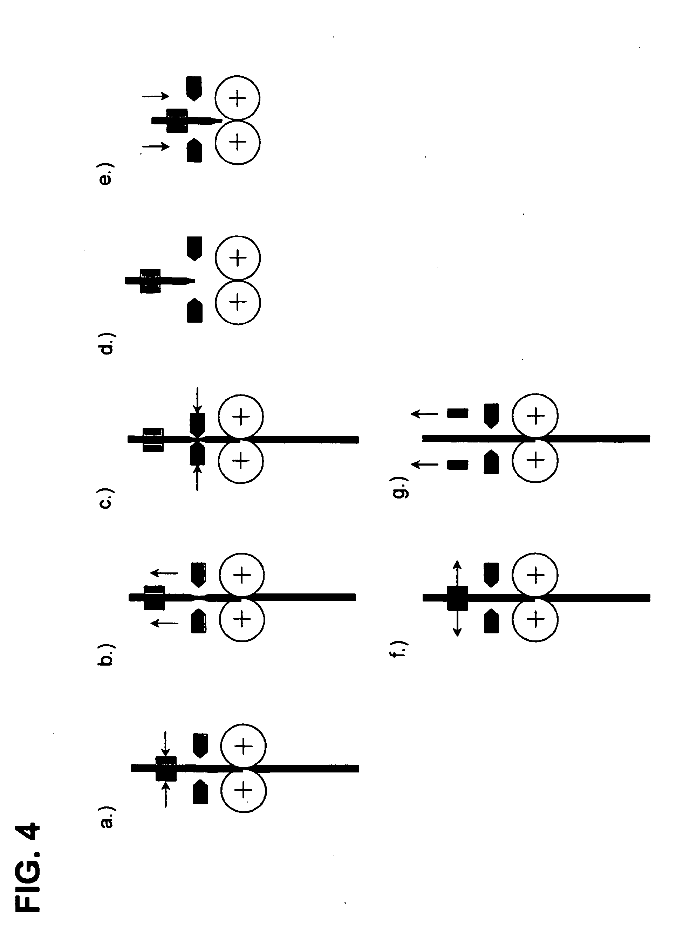

In Fig. 2 ist darüber hinaus ein Spulkopf 4 dargestellt. Zum Bespulen einer neuen Reifenseitenwand wird aus einem Extruder 21 bekannter Art rundschnurförmiges oder bandförmiges Kautschukmaterial 20 über einen am Spulkopf 4 befestigten Rollenträger mit in Förderrichtung hintereinander in einem Gestell 18 des Rollenträgers drehbar gelagerten Förderrollen 19, und im Anschluss daran zwischen zwei Halteplatten 16 und 17 hindurch, die jeweils an einem Hubkolben 14 bzw. 15 eines pneumatisch oder hydraulisch betätigbaren und von der Steuereinheit 30 gesteuert betätigten Hubkolbenzylinders in einem im Spulkopf 4 verschiebbar gelagerten Rahmen 13 befestigt sind, im Anschluss daran zwischen zwei jeweils an einem hydraulisch oder pneumatisch betätigbaren und von der Steuereinheit 30 gesteuert betätigten mit jeweils einem Hubkolbenmesser 10 bzw. 11 versehenen Hubkolben eines Hubkolbenzylinders einer Schneideeinrichtung 9 hindurch und zwischen zwei in Förderrichtung nachgeordneten zusammenwirkenden gesteuert von der Steuereinrichtung 30 rotatorisch angetriebenen Kalanderwalzen 7 und 8 eines Formkalanders 6 von den Kalanderwalzen hindurch gezogen und über Umlenkrollen bekannter Art hinweg auf eine nachgeordnete Auflegerolle 5 weiterfördert werden. Über die Auflegerolle 5 wird das von den profilierten Kalanderwalzen 6 und 7 des Formkalanders 6 ausgeformte bandförmige Material - wie in Fig. 1 und Fig. 4 zu erkennen ist - zwischen Wulstbereich 22 und Lauffläche des zu fertigenden Reifens auf die Karkasse des Reifenrohlings unter Druck aufgerollt.

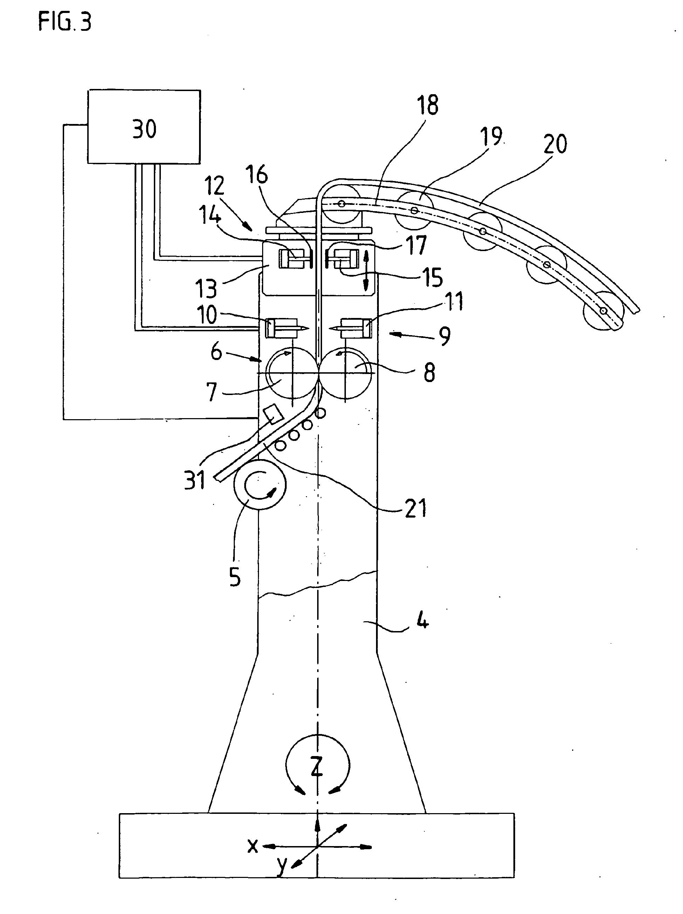

Hierzu wird zunächst der Spulkopf 4 in die parallel zur Rotationsachse des Spannkopfes 2 in den Figuren 2 und 3 dargestellte x-Richtung soweit verschoben, dass die Auflegerolle 5 in Berührkontakt mit dem Reifenrohling gerät. Durch von der Steuereinheit 30 gesteuertes, stufenloses Verschieben über eine nicht dargestellte bekannte Verschiebeeinrichtung in die Koordinatenrichtung x parallel zur Rotationsachse des Spannkopfs 2 und die Koordinatenrichtung y senkrecht zur Rotationsachse des Spannkopfs 2 kann dabei der Spulkopf 4 jeweils so positioniert werden, dass die Auflegerolle 5 mit gewünschtem Druck im Berührkontakt zum Reifenrohling 3 steht. Darüber hinaus ist - wie in Fig. 3 dargestellt ist - der Spulkopf 4 in bekannter nicht dargestellter Weise um eine senkrecht zur x-y-Ebene ausgerichtete Achse z stufenlos gesteuert schwenkbar, so dass über die Steuereinheit 30 der Spulkopf 4 jeweils so positioniert wird kann, dass die Aufliegerolle 5 jeweils mit ihrer Mantelfläche die zum Aufspulen gewünschte Ausrichtung zur Oberfläche des Reifenrohlings einnimmt.

Hierdurch wird - wie in Fig. 5 dargestellt ist - während der gesteuerten Rotation des Reifenrohlings um die Rotationsachse des Spannkopfs 2 das durch die Kalanderwalzen 7 und 8 ausgeformte Kautschukmaterial 20 von radial innen nach radial außen kontinuierlich auf die Karkasse aufgespult. Dabei können die einzelnen Windungen nebeneinander oder aber bei Bedarf auch einander überlappend aufgespult werden. Dies ist durch entsprechenden Vorschub der Bewegung des Spulkopfes 4 in der x-y-Ebene entlang der Kontur des torusförmigen Reifenrohlings möglich. Bei Bedarf wird hierzu kontinuierlich die Ausrichtung der Auflegerolle 5 zur Oberfläche der Kontur des torusförmigen Reifenrohlings durch gesteuertes Schwenken des Spulkopfs 4 um die z-Achse nach gestellt.

Bei Erfordernis wird in einer nicht dargestellten Ausführung zusätzlich die Auflegerolle 5 in z-Richtung stufenlos gesteuert verschiebbar ausgebildet ist. Bei einer derartigen Ausführung kann auch die Aufspulposition der Auflegerolle 5 gegenüber dem Reifenrohling in z-Richtung individuell gesteuert eingestellt oder während des Spulens verändert werden.

Sobald das zwischen den Hubkolbenmessern 10 und 11 hindurch gezogene rundschnurförmige oder bandförmige Kautschukmaterial eine derartige Länge erreicht hat, dass es der für die Herstellung der Seitenwand des Reifenrohlings gewünschten Aufspullänge entspricht, wird durch Steuereinheit 30 ein Schneideprozess ausgelöst. Hierzu werden die Hubkolben der Hubkolbenmesser10 und 11 pneumatisch bzw. hydraulisch im jeweiligen Hubkolbenzylinder auf einander zu verschoben und hierdurch das rundschnurförmige bzw. bandförmige Kautschukmaterial durch die von beiden Seiten einwirkenden Hubkolbenmesser 10 und 11 zerschnitten.

Sobald das durch den Schneideprozess erzeugte Ende des abgeschnittenen Kautschukstreifens von der Auflegerolle 5 auf die Seitenwand des Reifenrohlings aufgedrückt wurde, wird der Spulkopf durch gesteuertes Verschieben in der x-y-Ebene vom Reifenrohling entfernt.

Zum Bespulen einer neuen Reifenseitenwand wird ein neuer Reifenrohling auf den Spannkopf 2 aufgespannt und der Spulkopf 4 wiederum gesteuert an den Reifenrohling soweit herangeführt, dass der Spulprozess zum Aufbau der Reifenseitenwand eingeleitet werden kann.

Zum Einführen des Anfangs eines vom Extruder neu erzeugten rundschnurförmigen oder bandförmigen Kautschukstranges zwischen die Kalanderwalzen 7 und 8 werden zunächst die Hubkolben 14 und 15 von der Steuereinheit 30 gesteuert hydraulisch bzw. pneumatisch soweit aufeinander zu bewegt, dass die parallel zum Kautschukband 20 ausgerichteten Halteplatten 16 bzw. 17 jeweils in Reibkontakt zum Kautschukband 20 geraten und das Kautschukband 20 zwischen sich festhalten. Danach wird von der Steuereinheit 30 gesteuert der parallel zur Förderrichtung des Kautschukbandes 20 verschiebbar im Spulkopf 4 gelagerte Rahmen 13 in Förderrichtung auf die Kalanderwalzen 7 und 8 des Formkalanders 6 zu bewegt, so dass das Kautschukbandes 20 zwischen den Kalanderwalzen 7 und 8 eingeführt und von den Kalanderwalzen 7 und 8 durch den in den Kalanderspalt zwischen den Kalanderwalzen 7 und 8 eingezogen wird. Dieser Zustand ist in Fig. 4a dargestellt. Danach wird - wie in Fig. 4f zu erkennen ist - der Kontakt zwischen den Halteplatten 16 und 17 zum Kautschukstreifen durch hydraulisches Betätigen der Hubkolben 14 und 15 senkrecht zur Förderrichtung des Kautschukbandes 20 weg vom Kautschukmaterial wiederum gelöst. Danach wird - wie in Fig.4g dargestellt ist - der Rahmen 13 wiederum in seine Ausgangsposition angehoben.

Zum Schneiden werden zunächst die Hubkolben 14 und 15 von der Steuereinheit 30 gesteuert hydraulisch bzw. pneumatisch soweit aufeinander zu bewegt, dass die parallel zum Kautschukband 20 ausgerichteten Halteplatten 16 bzw. 17 jeweils in Reibkontakt zum Kautschukband 20 geraten und das Kautschukband 20 zwischen sich festhalten. Danach wird von der Steuereinheit 30 gesteuert der parallel zur Förderrichtung des Kautschukbandes 20 verschiebbar im Spulkopf 4 gelagerte Rahmen 13 in Fördergeschwindigkeit der Kalanderwalzen 7 und 8 in Förderrichtung auf die Kalanderwalzen 7 und 8 des Formkalanders 6 zu bewegt, so dass das Kautschukbandes 20 in Richtung des zwischen den Kalanderwalzen 7 und 8 gebildeten Kalanderspaltes geführt wird, wobei das Kautschukband 20 weiterhin von den Kalanderwalzen 7 und 8 durch den in den Kälanderspalt zwischen den Kalanderwalzen 7 und 8 eingezogen wird. Dieser Zustand ist in Fig. 4a dargestellt. Danach wird der Rahmen 13 wieder in Gegenförderrichtung gesteuert zurückbewegt. Das zwischen den Halteplatten 16 und 17 und zwischen den Kalanderwalzen 7 und 8 jeweils eingespannte Kautschukband 20 wird hierdurch zwischen den beiden Einspannpositionen gedehnt. Hierdurch entsteht eine Einschnürung des Kautschukbandes 20. Die Position der Hubkolbenmesser 10 und 11 im Spulkopf 4 ist dabei so gewählt, dass diese im Bereich des erwarteten dünnsten Querschnitts des gedehnten Materials positioniert sind. Dies ist in Fig. 4b dargestellt. Danach werden - wie in Fig. 4c zu erkennen ist - die Hubkolbenmesser 10 und 11 hydraulisch bzw. pneumatisch gesteuert aufeinander zu bewegt, so dass das Kautschukband 20 im Bereich des dünnsten Querschnitts durchtrennt wird. Das Ende des vorangegangenen Streifenmaterials wird weiter zum Reifenrohling gefördert. Wie in Fig.4d zu erkennen ist, ist auch der Anfang des nächsten Streifenmaterials verjüngt ausgebildet und wird - wie in Fig. 4e zu erkennen ist - durch Verschieben des Rahmens 13 in Förderrichtung in den Kalanderspalt zwischen die Kalanderwalzen 7 bzw. 8 eingeführt. Danach wird - wie in Fig. 4f zu erkennen ist - der Kontakt zwischen den Halteplatten 16 und 17 zum Kautschukstreifen durch hydraulisches Betätigen der Hubkolben 14 und 15 senkrecht zur Förderrichtung des Kautschukbandes 20 weg vom Kautschukmaterial wiederum gelöst. Danach wird - wie in Fig.4g dargestellt ist - der Rahmen 13 wiederum in seine Ausgangsposition angehoben.

Wie in den Figuren 4c zu erkennen, ist auch das Ende des vorangegangenen Streifens verjüngt ausgebildet. Die Verjüngung von Anfang und Ende des Kautschukstreifens ermöglichen beim Aufspulen auf die Oberfläche des Reifenrohlings am Anfang und am Ende einen gleichmäßigen Übergang zur Oberfläche des Reifenrohlings.

Zur Ermittlung der Länge des Kautschukstreifenmaterials zur richtigen Ablängung auf die aufzuspulende Länge wird in einer Ausführung die Länge aus den vorhandenen Daten über Fördergeschwindigkeit, die beispielsweise aus der Drehgeschwindigkeit der Kalanderwalzen 7 und 8 ermittelt wird oder direkt gemessen wird, und der Förderzeit ermittelt. In einer alternativen Ausführung wird - wie in Fig. 2 dargestellt - die Länge des geförderten Kautschukbandmaterials mittels im Spulkopf ausgebildeten Sensoren 31 zur Ermittlung eines Kautschukbandes bekannter Art gemessen und diese Daten an die Steuereinheit zur Verarbeitung weitergeleitet. Die Sensoren sind beispielsweise zwischen Schneideeinrichtung mit Hubschneidemessern 10 und 11 und dem Formkalander 6 mit den Kalanderwalzen 7 und 8 oder aber - wie in Fig. 2 dargestellt ist - in Förderrichtung dem Kalander angeordnet.

Wie in Fig. 5 dargestellt ist, werden auch die Laufstreifenkautschukmischungen zum Aufbau der radial inneren Gummilage (Base) 32 und der radial äußeren Gummilage (Cap) 33 des Laufstreifens 29 des Reifens über einen - wie oben dargestellten - Spulkopf 4 aus einem in entsprechend gleicher Weise hergestellten Kautschukstreifen über eine Auflegerolle 25 des Spulkopfs 4 aufgespult. In Fig. 5 ist dabei eine Ausführung dargestellt, bei der der Kautschukstreifen auf einen auf die Karkasse des Reifenrohlings aufgebauten Gürtel 23 bekannter Art aufgespult wird. Anstelle der radialen Bewegung entlang der Seitenwandkontur erfolgt das Auflegen mit gesteuerter axialer Bewegung längs der Kontur des Fahrzeugluftreifens im Laufstreifenbereich. Während der gesteuerten Rotation des Reifenrohlings um die Rotationsachse des Spannkopfs 2 wird das durch die Kalanderwalzen 7 und 8 ausgeformte Kautschukmaterial 20 in axialer Richtung A längs der axialen Erstreckung des Gürtels kontinuierlich auf den Gürtel 23 aufgespult. Dabei können die einzelnen Windungen nebeneinander oder aber bei Bedarf auch einander überlappend ausgespult werden. Dies ist durch entsprechenden Vorschub der Bewegung des Spulkopfes 4 in der x-y-Ebene entlang der Kontur des torusförmigen Reifenrohlings möglich. Bei Bedarf wird hierzu kontinuierlich die Ausrichtung der Auflegerolle 5 zur Oberfläche der Kontur des torusförmigen Reifenrohlings durch gesteuertes Schwenken des Spulkopfs 4 um die z-Achse nach gestellt.

Es ist möglich, unterschiedliche Dicken der Laufstreifenaufbaulagen und / oder der Seitenwand jeweils durch gesteuerte Änderung des Vorschubes des Spulkopfes entlang der zu bespulenden Reifenkontur und somit durch gezielte unterschiedliche Überlappung der einzelnen nebeneinander ausgebildeten Windungen des gespulten Streifenmaterials auszubilden.

Hierzu kann zusätzlich durch gezielte Veränderung des Ausrichtewinkels der Auflegerolle 5 bzw. der Auflegerolle 25 zur Oberfläche des Reifenrohlings die Konturierung und Dickenverteilung gesteuert beeinflusst werden. Bei Bedarf wird hierzu kontinuierlich die Ausrichtung der Auflegerolle 5 bzw. der Auflegerolle 25 zur Oberfläche der Kontur des torusförmigen Reifenrohlings durch gesteuertes Schwenken der Auflegerolle 5 bzw der Auflegerolle 25 um die in Abrollrichtung gerichtete, die Drehachse der Auflegerolle 5 bzw. der Auflegerolle 25 schneidende x'-Achse nach gestellt. Die x'-Achse sowie ein die Schwenkbewegungsrichtung darstellender Richtungspfeil sind in Fig. 5 am Beispiel der Auflegerolle 25 eingezeichnet.

Ebenso ist es möglich, die Laufstreifenaufbaulagen bzw. die Seitenwand aus mehreren derartigen Kautschukstreifen aufzuspulen. Dabei können diese Kautschukstreifen bei Bedarf aus unterschiedlichem Kautschukmaterial und/oder unterschiedlich ausgeformt sein. Die unterschiedliche Ausformung erfolgt beispielsweise durch geänderte Kalanderwalzen 7 des Formkalanders.

Der Schulterstreifen 31 wird in einer Ausführung zusammen mit der Seitenwand als gemeinsames Bauteil aufgespult, in einer anderen Ausführung wird der Schulterstreifen 31 im Anschluss an die Ausbildung der Seitenwand 28 und des Laufstreifens 29 als eigenständiges Bauteil aufgespult.

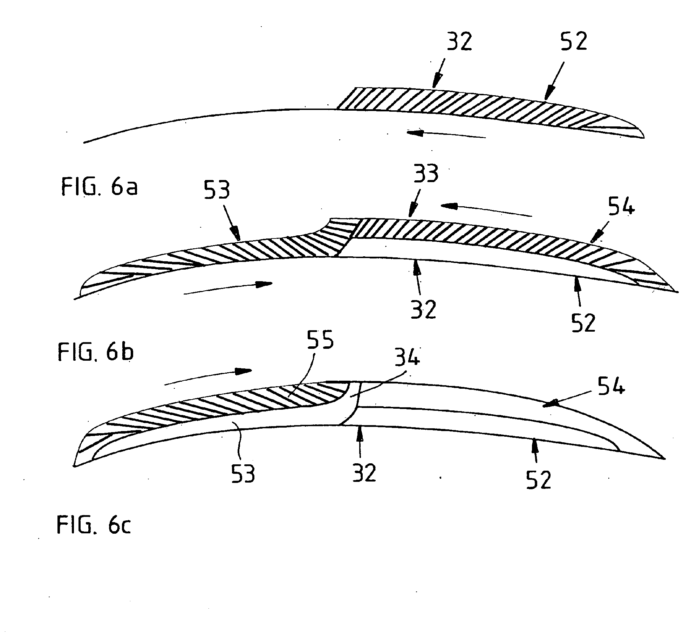

In den Fig. 6a bis 6c ist schematisch das Spulmuster eines in dieser Weise durch Spulen ausgebildeten Laufstreifens aus radial innerer Laufstreifenlage (Base) 32, aus radial äußerer Laufstreifenlage (Cap) 33 mit Steg 34 dargestellt.

Hierzu wird, wie in den Fig. 6a zu erkennen ist, durch Spulen aus einem aus einer Basemischung mit hoher elektrischer Leitfähigkeit - beispielsweise mit hohem Anteil an Ruß - hergestellten Kautschukband 24 ausgebildete rechte Seite 52 der Baselage 32 hergestellt. Die rechte Seite 52 der Baselage 32 wird bei diesem Ausführungsbeispiel von der rechten Reifenschulter nach links über die gesamte axiale Erstreckung der nicht dargestellten Gürtellagen bis zur gewünschten Positionierung des Steges 34 unter Überlappung der einzelnen nebeneinander liegenden benachbarten Windungen des schraubenförmig um die Rohlingsachse aufgespulten Kautschukbandes 24 hergestellt. Dabei wird durch gesteuertes Verändern des Vorschubs des Spulkopfes in axialer Richtung A des Reifenrohlings die Überlappung der Windungen gesteuert eingestellt.

Anschließend wird - wie in Fig. 6b dargestellt ist - auf die radiale Außenseite der in dieser Weise hergestellte rechte Seite 52 der Baselage 32 durch Spulen aus einem aus einer Capmischung mit gegenüber der Basemischung geringerer elektrischer Leitfähigkeit - beispielsweise mit hohem Anteil an Kieselerde - hergestellten Kautschukband 24 ausgebildete rechte Seite 54 der Caplage 33 hergestellt. Die rechte Seite 54 der Caplage 32 wird bei dem dargestellten Ausführungsbeispiel von der rechten Reifenschulter nach links über die gesamte axiale Erstreckung der nicht dargestellten Gürtellagen bis zur gewünschten Positionierung des Steges 34 unter Überlappung der einzelnen nebeneinander liegenden benachbarten Windungen des schraubenförmig um die Rohlingsachse aufgespulten Kautschukbandes 24 hergestellt. Dabei wird durch gesteuertes Verändern des Vorschubs des Spulkopfes in axialer Richtung A des Reifenrohlings die Überlappung der Windungen gesteuert eingestellt.

Zur Vereinfachung sind in Fig.6b die gespulten Windungen der rechten Seite 52 der Baselage 32 nicht mehr einzeln eingezeichnet.

Anschließend wird - wie in Fig. 6b dargestellt ist - durch Spulen aus einem aus der Basemischung mit hoher elektrischer Leitfähigkeit - beispielsweise mit hohem Anteil an Ruß - hergestellten Kautschukband 24 ausgebildete linke Seite 53 der Baselage 32 hergestellt. Die linke Seite 53 der Baselage 32 wird bei diesem Ausführungsbeispiel von der linken Reifenschulter nach rechts über die gesamte axiale Erstreckung der nicht dargestellten Gürtellagen bis zur bereits aufgebauten rechten Seite 52 der Baselage 32 unter Überlappung der einzelnen nebeneinander liegenden benachbarten Windungen des schraubenförmig um die Rohlingsachse aufgespulten Kautschukbandes 24 hergestellt. Das Kautschukband 24 wird entlang der zur linken Seite weisenden Stirnfläche der rechten Seite 52 der Baselage 32 und der rechten Seite 54 der Caplage 33 unter Überlappung der einzelnen nebeneinander liegenden benachbarten Windungen schraubenförmig und/oder spiralförmig um die Rohlingsachse nach radial außen zur Bildung des Steges 34 bis an die radial äußere Peripherie des aufzubauenden Laufstreifens herangewickelt. Dabei wird durch gesteuertes Verändern des Vorschubs des Spulkopfes in axialer Richtung A des Reifenrohlings die Überlappung der Windungen gesteuert eingestellt.

Anschließend wird - wie in Fig. 6c dargestellt ist - auf die radiale Außenseite der in dieser Weise hergestellte linken Seite 53 der Baselage 32 durch Spulen aus einem aus der Capmischung mit gegenüber der Basemischung geringerer elektrischer Leitfähigkeit - beispielsweise mit hohem Anteil an Kieselerde - hergestellten Kautschukband 24 ausgebildete linke Seite 55 der Caplage 33 hergestellt. Die linke Seite 55 der Caplage 32 wird bei dem dargestellten Ausführungsbeispiel von der linken Reifenschulter nach rechts über die gesamte axiale Erstreckung der nicht dargestellten Gürtellagen bis zu dem entlang der zur linken Seite weisenden Stirnfläche der rechten Seite 52 der Baselage 32 und der rechten Seite 54 der Caplage 33 aus dem Kautschukband der linken Seite 53 der Baselage 32 gewickelten Steg 34 unter Überlappung der einzelnen nebeneinander liegenden benachbarten Windungen des schraubenförmig um die Rohlingsachse aufgespulten Kautschukbandes 24 hergestellt. Dabei wird durch gesteuertes Verändern des Vorschubs des Spulkopfes in axialer Richtung A des Reifenrohlings die Überlappung der Windungen gesteuert eingestellt.

Der Steg 34 ist - in der in Fig. 6b dargestellten Ausbildung - in der Schnittebene mit der radial äußeren Mantelfläche der radial inneren Lage 32 (Base) mit seiner Querschnittskontur mit einer axialen Erstreckungsbreite a ausgebildet. Die Querschnittskontur des Steges 34 ist längs der radialen Erstreckung des Reifenrohlings von radial innen nach radial außen mit einer degressiv abnehmenden Erstreckungslänge ausgebildet. In der radialen Position der maximalen radial äußeren Erstreckung des Steges 34 erstreckt sich dieser in axialer Erstreckung nur noch über eine axiale Erstreckungslänge b mit b < a.

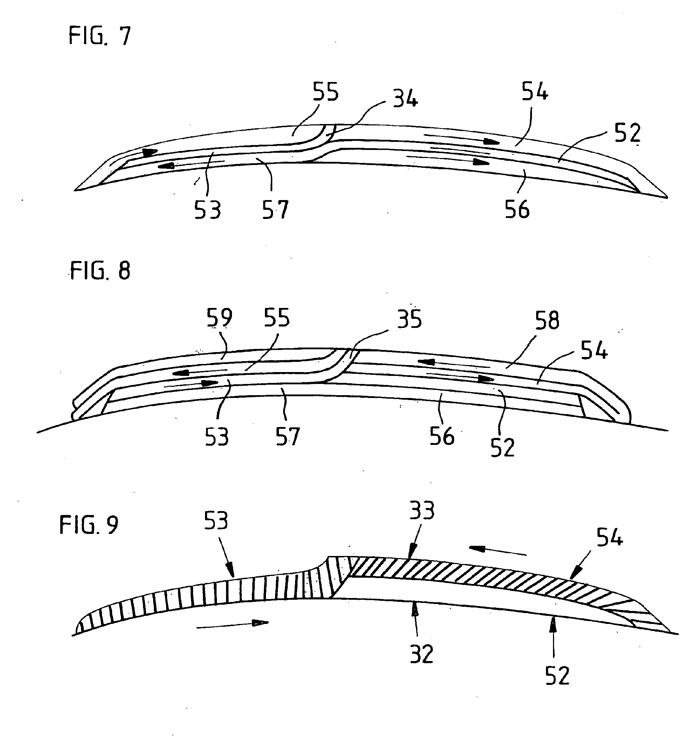

In Fig. 7 ist das Spulbild einer alternativen Herstellung eines Laufstreifens mit zwei radial übereinander ausgebildeten radial inneren Baselagen. Hierzu wird zunächst durch Spulen aus einem aus einer Basemischung mit hoher elektrischer Leitfähigkeit - beispielsweise mit hohem Anteil an Ruß - hergestellten Kautschukband 24 eine rechte Seite 52 der radial inneren Lage der Baselage 32 hergestellt. Die rechte Seite 56 der radial inneren Lage wird bei diesem Ausführungsbeispiel von der rechten axialen Randposition des auszubildenden Steges 34 bis zur rechten Reifenschulter nach in axialer Richtung nach rechts über die gesamte axiale Erstreckung der nicht dargestellten Gürtellagen unter Überlappung der einzelnen nebeneinander liegenden benachbarten Windungen des schraubenförmig um die Rohlingsachse aufgespulten Kautschukbandes 24 hergestellt. Dort wird nach Richtungswechsel des Vorschubs des Spulkopfes das Kautschukband 24 auf der radial äußeren Oberfläche der aufgebauten rechten Seite 56 in entgegengesetzter axialer Richtung die rechte Seite 52 der radial äußeren Lage der Baselage 32 und in deren axialer Verlängerung die linke Seite 57 der radial inneren Lage der Baselage 32 bis zur linken Reifenschulter hin aufgespult. Dort wird nach erneutem Richtungswechsel des Vorschubs des Spulkopfes das Kautschukband 24 auf der radial äußeren Oberfläche der aufgebauten linken Seite 56 in entgegengesetzter axialer Richtung die linke Seite 53 der radial äußeren Lage der Baselage 32 aufgespult. Während dessen wird - wie im Zusammenhang mit Fig. 6b erläutert - die rechte Seite 54 der Caplage 33 aufgebaut. Der Spulvorgang zum Aufbau der linken Seite 53 der radial äußeren Baselage wird bei Erreichen der durch des im Übergang zwischen rechter Seite 52 der radial äußeren Baselage zur linken Seite 57 der radial innern Baselage an der axialen Stirnfläche der rechten Seite 56 der radial inneren Baselage gebildeten Stufe entlang der Stufe und der axialen Stirnseite der rechten Seite 54 der Caplage nach radial außen zur Bildung eines Steges schrauben- und/oder spiralförmig weitergewickelt. Dabei wird durch gesteuertes Verändern des Vorschubs des Spulkopfes in axialer Richtung A des Reifenrohlings die Überlappung der Windungen jeweils gesteuert eingestellt. Die linke Seite 55 der Cap wird analog zur Ausführung von Fig. 6c aufgebaut.

In Fig. 8 ist das Spulbild einer weiteren alternativen Herstellung eines Laufstreifens mit sowohl zwei radial übereinander ausgebildeten radial inneren Baselagen als auch mit zwei radial übereinander ausgebildeten radial äußeren Caplagen dargestellt. Die Ausbildung erfolgt wie im Ausführungsbeispiel von Fig. 7, wobei jedoch nach Aufbau der rechten Seite 54 der Caplage die Vorschubrichtung des Spulkopfes geändert wird und das Kautschukband der rechten Seite 54 der Caplage auf der radial äußeren Oberfläche der aufgespulten rechten Seite 54 der Caplage zurückgespult und hierdurch die rechte Seite 58 einer weiteren Caplage, axial die bis zur Position des gewünschten Steges 34 reicht, ausgebildet wird. Das Kautschukband der linken Seite 53 der äußeren Baselage wird dann zur Bildung des Steges 34 radial außerhalb der rechten Seite 54 der radial inneren Caplage zusätzlich entlang der axialen Stirnseite der rechten Seite 58 der radial äußeren Caplage nach radial außen zur Peripherie des Reifens gewickelt. Nach Aufbau der linken Seite 55 der Caplage wird die Vorschubrichtung des Spulkopfes geändert und das Kautschukband der linken Seite 55 der Caplage auf der radial äußeren Oberfläche der aufgespulten linken Seite 55 der Caplage zurückgespult und hierdurch die linke Seite 59 einer weiteren Caplage, die sich bis zur linken Schulter erstreckt, ausgebildet.

In alternativer Spulung ist es auch möglich die linke Seite 55 der radial inneren Caplage und die linke Seite 59 der radial äußeren Caplage mit geänderter Spulrichtung aufzubauen, wobei der Spulvorgang der radial inneren Caplage vom Steg ausgehend zur nach axial außen zur linken Schulter hin und der Spulvorgang der radial äußeren Caplage von der linken Schulter ausgehend nach axial innen zum Steg hin erfolgt.

In Fig. 9 ist eine weitere Ausführung zur Ausformung des Steges 34 dargestellt. In Figur 6b ist das Kautschukband 24 in seinem Querschnitt zur Ausbildung des Steges mit geringem Neigungswinkel zur Axialen A aufgelegt und der Steg 34 hierdurch unter Einbezug von spiralig radial übereinander angeordneten Windungen ausgebildet. In Figur 9 ist das Kautschukband 24 in seinem Querschnitt zur Ausbildung des Steges mit großem Neigungswinkel zur Axialen A aufgelegt und der Steg 34 hierdurch hauptsächlich unter Einbezug von schraubenförmig axial nebeneinander sich überlappender Windungen ausgebildet.

Der auf diese Weise wie in den verschiedenen Ausführungen im Zusammenhang mit den Figuren 5 bis 8 erläuterten Ausführungen hergestellte Reifenrohling mit radial innerer Laufstreifenlage (Base) 32 und radial äußerer Laufstreifenlage (Cap) 33 mit dem durch die radial äußere Laufstreifenlage (Cap) 33 erstreckten Steg 34 wird vom Spannkopf in bekannter nicht näher dargestellter Weise entfernt und einer nicht näher dargestellten Vulkanisationspresse bekannter Art zugeführt, in der er unter Ausformung der Laufstreifenprofilierung und des Seitenwanddesigns vulkanisiert wird.

Anstelle des oben genannten Spannkopfes 2 wird der Reifenrohling zum Bespulen mit Laufstreifen und/oder Seitenwänden in alternativer Herstellung auch auf einer Reifenaufbautrommel bekannter Art aufgebaut.

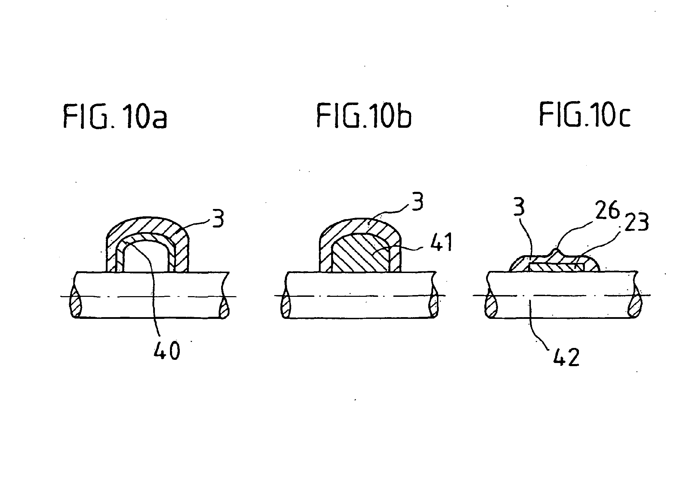

Wie in Fig. 10a dargestellt, wird der Reifenrohling 3 in einer Ausführung auf einem torusförmig expandierten Balg 40 beispielsweise einem Bombierbalg zum Bespulen mit Laufstreifen und/oder Seitenwänden aufgebaut. Der Spulvorgang zum Aufbau des Laufstreifens und/oder der Seitenwände erfolgt wie in den oben genannten Ausführungsbeispielen erläutert.

Wie in Fig. 10b dargestellt, wird der Reifenrohling 3 in anderer Ausführung auf einem torusförmig ausgebildeten festen Aufbaukem 41 zum Bespulen mit Laufstreifen und/oder Seitenwand aufgebaut. Der Spulvorgang zum Aufbau des Laufstreifens und/oder der Seitenwände erfolgt wie in den oben genannten Ausführungsbeispielen erläutert.

In der in Fig. 10c dargestellten Ausführung sind auf einer Gürtelaufbautrommel 42 bekannter Art mit im Wesentlichen zylindrisch ausgebildeter radial äußerer Oberfläche die Gürtellagen eines Gürtels 23 aufgebaut. Auf den Gürtel 23 werden, in gleicher Weise wie in den Ausführungen zu Fig. 5 bis 9 erläutert, die radial innere Laufstreifenlage (Base) 32 schraubenförmig um die Gürtelaufbautrommel 42 aufgespult. Wie im Zusammenhang mit den Figuren 5 bis 9 ausgeführt, wird dabei ein Steg 34 schraubenförmig und/oder spiralförmig mit aufgespult. Das auf diese Weise vorgefertigte Laufstreifengürtelpaket aus Gürtel 23 und Laufstreifen wird in bekannter nicht näher dargestellter Weise von der Gürtelaufbautrommel 42 entnommen und auf ein auf einer nicht dargestellten Karkassenaufbautrommel bekannter Art aus den Bestandteilen zur Ausbildung des Wulstbereichs mit Wulstkern, Kernreiter, Wulstverstärkungsstreifen und anderen gewünschten Bauteilen zum Aufbau des Wulstbereichs, der Innenschicht und der Karkassenlage aufgebauten und torusförmig ausgeformtes Karkassenpaket aufgelegt und mit diesem in bekannter Weise verbunden.

Die Seitenwände werden in einer Ausführung dabei im Rahmen der Herstellung des Karkassenpaketes auf einer flachen Karkassenaufbautrommel bekannter Art auf die Karkasse mit einem in den Erläuterungen zu den Figuren 2 bis 4 ausgebildeten Spulkopf aufgespult oder in konventioneller Weise aufgebaut.

In anderer Ausführung wird die Seitenwand nach torusförmiger Erhebung vor Vereinigung mit dem Gürtelpaket auf die Karkasse in der im Zusammenhang mit den Erläuterungen zu den Figuren 2 bis 4 beschriebenen Weise aufgespult oder in herkömmlicher Weise aufgelegt.

In anderer alternativer Ausbildung wird die Seitenwand nach Vereinigung des Laufstreifengürtelpakets mit dem torusförmig ausgeformten Karkassenpaket in der im Zusammenhang mit den Figuren 2 bis 4 erläuterten Weise aufgespult oder in herkömmlicher Weise aufgelegt.

Die eingesetzte Kautschukmischung mit hoher elektrischer Leitfähigkeit für die radial innere Laufstreifenlage (Base) 32 sowie für die Ausbildung des Steges 34 ist beispielsweise eine Kautschukmischung, die nach der Vulkanisation einen spezifischen Widerstand von nicht mehr als 10⁶ Ω · cm bei 25° C aufweist. Die eingesetzte Kautschukmischung mit niedriger elektrischer Leitfähigkeit zur Ausbildung der radial äußeren Laufstreifenlage (Cap) 33 ist beispielsweise eine Kautschukmischung, die nach der Vulkanisation einen spezifischen Widerstand von 10⁸ Ω · cm bei 25° C aufweist.

Die axiale Position des Steges 34 ist so gewählt, dass der Steg 34 im axialen Erstreckungsbereich von radial erhabenen Profilelementen, beispielsweise von Umfangsrippen oder Profilblockreihen, des beabsichtigten Laufstreifenprofiles ausgebildet ist und beim Abrollen des Fahrzeugluftreifens in gesichertem Berührkontakt zur Straßenoberfläche steht.

In einer Ausführung wird anstelle des oben genannten einfach ausgebildeten Steges 34 in zwei oder drei unterschiedlichen axialen Positionen des Laufstreifenprofils ein derartiger Steg 34 ausgebildet.

Der Querschnitt des Steges 34 ist in seiner Grundkontur symmetrisch dreieckig und senkrecht zur inneren Laufstreifenlage (Base) 32 ausgebildet mit - wie oben dargestellt - degressiv abnehmender axialer Erstreckung in radialer Richtung von innen nach außen. Die Grundkontur ist in anderer Ausführung ein rechteckiges Parallelogramm oder pilzförmig, je nach individuell gewünschtem zu konturierendem Verlauf.

Wie in Fig. 8 dargestellt, ist in anderer Ausführung der Steg nicht senkrecht zur inneren Laufstreifenlage (Base) 32, sondern mit gezielter schräg geneigter Konturierung ausgebildet.

In weiterer Ausführung reicht der Steg nach Aufbau der Cap geringfügig radial über die radiale Erstreckung der Cap hinaus und wird mit nicht dargestellten Andrückrollen auf der radialen Außenfläche der Cap verrollt.

### Bezugszeichenliste

### (Teil der Beschreibung)

- 1: Gestell
- 2: Spannkopf
- 3: Karkasse
- 4: Spulkopf
- 5: Auflegerolle
- 6: Formkalander
- 7: Kalanderwalze
- 8: Kalanderwalze
- 9: Schneideeinrichtung
- 10: Hubkolbenmesser
- 11: Hubkolbenmesser
- 12: Zuführeinrichtung
- 13: Rahmen
- 14: Hubkolben
- 15: Hubkolben
- 16: Halteplatte
- 17: Halteplatte
- 18: Träger
- 19: Führungsrolle
- 20: Kautschukband
- 21: Extruder
- 22: Wulstbereich
- 23: Gürtellagen
- 24: Kautschukband
- 25: Auflegerolle
- 26: Materialanhäufung
- 27: Wulstkern
- 28: Seitenwand
- 29: Laufstreifen
- 30: Steuereinheit
- 31: Wing
- 32: Base
- 33: Cap
- 34: Steg
- 35: Hornprofil
- 36:
- 37:
- 38:
- 39:
- 40: Balg
- 41: Aufbaukem
- 42: Gürtelaufbautrommel
- 52: Rechte Lagenseite
- 53: Linke Lagenseite
- 54: Rechte Lagenseite (Cap)
- 55: Linke Lagenseite (Cap)
- 56: Rechte Lagenseite (Base)
- 57: Linke Lagenseite (Base)
- 58: Rechte Lagenseite (Cap)
- 59: Linke Lagenseite (Base)

## Patentansprüche

1. Verfahren zur Herstellung eines Laufstreifens für einen Fahrzeugreifen - insbesondere eines Fahrzeugluftreifens - , mit einer radial inneren Schicht aus einem ersten Gummimaterial und mit einer radial äußeren die Bodenkontaktfläche des Fahrzeugluftreifens bildenden zweiten Schicht aus einem zweiten Gummimaterial, wobei das erste Gummimaterial insbesondere eine höhere elektrische Leitfähigkeit aufweist als das zweite Gummimaterial, und wobei sich das erste Gummimaterial in Form eines über den Umfang des Fahrzeugluftreifens erstreckten die zweite Schicht axial teilenden Steges radial nach außen durch die zweite Schicht hindurch bis zur Bodenkontaktfläche erstreckt,
**dadurch gekennzeichnet,**
**dass** auf eine rotationssymmetrische Aufbaufläche auf einer der beiden axialen Seiten des auszubildenden Steges (34) eine Lage der ersten Schicht aus einem ersten Kautschukmaterial und die zweite Schicht aus einem zweiten Kautschukmaterial jeweils in einem ersten axialen Erstreckungsbereich, der bis zur Position des Steges reicht, radial aufeinander aufgebaut werden,
**dass** von der anderen axialen Seite des auszubildenden Steges (34) aus in einem zweiten axialen Erstreckungsbereich durch schraubenförmiges Aufwickeln eines bandförmigen Kautschukstreifens aus dem ersten Kautschukmaterial mit mehreren axial nebeneinander oder zumindest zum Teil axial überlappt angeordneten Windungen um die Rotationsachse bis an die bereits im ersten axialen Erstreckungsbereich ausgebildete Lage der ersten Schicht heran die Lage der ersten Schicht in axialer Richtung geschlossen wird, wobei bei Erreichen der im axialen Erstreckungsbereich ausgebildeten Lage der ersten Schicht, der bandförmige Kautschukstreifen weiter in Berührkontakt zur axialen Stirnfläche zunächst der im ersten Erstreckungsbereich ausgebildeten Lage der ersten Schicht und dann der zweiten Schicht mit mehreren Windungen zur Ausbildung des Steges schrauben- und/oder spiralförmig um die Rotationsachse nach radial außen bis zur Einhüllenden des aufzubauenden Laufstreifens gewickelt wird,
**dass** danach im zweiten axialen Erstreckungsbereich die zweite Schicht aus dem zweiten Kautschukmaterial axial bis zum Steg (34) aufgebaut wird.

2. Verfahren zur Herstellung eines Laufstreifens für einen Fahrzeugreifen gemäß den Merkmalen von Anspruch 1,
wobei auch die Lage der ersten Schicht im ersten axialen Erstreckungsbereich durch schraubenförmiges Aufwickeln eines bandförmigen Kautschukstreifens aus dem ersten Kautschukmaterial mit mehreren axial nebeneinander oder zumindest zum Teil axial überlappt angeordneten Windungen um die Rotationsachse aufgebaut wird.

3. Verfahren zur Herstellung eines Laufstreifens für einen Fahrzeugreifen gemäß den Merkmalen von Anspruch 1 oder 2,
wobei auch die zweite Schicht im ersten axialen Erstreckungsbereich durch schraubenförmiges Aufwickeln eines bandförmigen Kautschukstreifens aus dem ersten Kautschukmaterial mit mehreren axial nebeneinander oder zumindest zum Teil axial überlappt angeordneten Windungen um die Rotationsachse aufgebaut wird.

4. Verfahren zur Herstellung eines Laufstreifens für einen Fahrzeugreifen gemäß den Merkmalen von einem oder mehreren der vorangegangenen Ansprüche,
wobei auch die zweite Schicht im zweiten axialen Erstreckungsbereich durch schraubenförmiges Aufwickeln eines bandförmigen Kautschukstreifens aus dem ersten Kautschukmaterial mit mehreren axial nebeneinander oder zumindest zum Teil axial überlappt angeordneten Windungen um die Rotationsachse aufgebaut wird.

5. Verfahren zur Herstellung eines Laufstreifens für einen Fahrzeugreifen gemäß den Merkmalen von einem oder mehreren der vorangegangenen Ansprüche,
wobei die Lage der erste Schicht, auf die die zweite Schicht aufgebaut wird, die radial äußere Lage einer mehrlagig -insbesondere zweilagig - aufgebauten ersten Schicht aus dem ersten Kautschukmaterial ist,
wobei insbesondere die radial innerhalb der radial äußeren Lage ausgebildete Lage der ersten Schicht durch schraubenförmiges Aufwickeln des bandförmigen Kautschukstreifens aus dem ersten Kautschukmaterial mit mehreren axial nebeneinander oder zumindest zum Teil axial überlappt angeordneten Windungen um die Rotationsachse aufgebaut wird und danach die radial äußere Lage in dem ersten axialen Erstreckungsbereich.

6. Laufstreifen eines Fahrzeugreifens - insbesondere eines Fahrzeugluftreifens - , mit einer radial inneren Schicht (32) aus einem ersten Gummimaterial und mit einer radial äußeren die Bodenkontaktfläche des Fahrzeugluftreifens bildenden zweiten Schicht (33) aus einem zweiten Gummimaterial, wobei das erste Gummimaterial insbesondere eine höhere elektrische Leitfähigkeit aufweist als das zweite Gummimaterial, und wobei sich das erste Gummimaterial in Form eines über den Umfang des Fahrzeugluftreifens erstreckten, die zweite Schicht axial teilenden Steges (34) radial nach außen durch die zweite Schicht (33) hindurch bis zur Bodenkontaktfläche erstreckt, **dadurch gekennzeichnet,**
**dass** auf einer der beiden axialen Seiten des Steges (34) eine Lage der ersten Schicht aus einem ersten Kautschukmaterial und die zweite Schicht aus einem zweiten Kautschukmaterial jeweils in einem ersten axialen Erstreckungsbereich, der bis zur Position des Steges (34) reicht, radial aufeinander ausgebildet sind, und dass von der anderen axialen Seite des Steges (34) aus in einem zweiten axialen Erstreckungsbereich ein ununterbrochener, bandförmiger Gummistreifen aus dem ersten Gummimaterial mit mehreren axial nebeneinander oder zumindest zum Teil axial überlappt angeordneten Windungen schraubenförmig um die Rotationsachse des Fahrzeugreifens bis an die bereits im ersten axialen Erstreckungsbereich ausgebildete Lage der ersten Schicht heran erstreckt ist, wodurch die Lage der ersten Schicht in axialer Richtung geschlossen ausgebildet ist, und in unterbrochener Weiterführung des bandförmigen Gummistreifens von radial innen nach radial außen in Berührkontakt zur axialen Stirnfläche der im ersten Erstreckungsbereich ausgebildeten Lage der ersten Schicht und der zweiten Schicht mit mehreren schrauben- und/oder spiralförmig ausgebildeten Windungen des bandförmigen Gummistreifens um die Rotationsachse des Fahrzeugluftreifens der Steg (34) ausgebildet ist.

## Claims

1. Method for producing a tread rubber for a vehicle tire - in particular a pneumatic vehicle tire - with a radially inner layer of a first rubber material and a radially outer second layer of a second rubber material, forming the ground-contact surface of the pneumatic tire, wherein the first rubber material has in particular a higher electrical conductivity than the second rubber material, and wherein the first rubber material extends radially outward through the second layer up to the ground-contact surface in the form of a web that is made to extend over the circumference of the pneumatic tire and axially divides the second layer, **characterized in that** a ply of the first layer of a first rubber material and the second layer of a second rubber material are built up radially one on top of the other on a rotationally symmetrical building surface, on one of the two axial sides of the web (34) to be formed, in each case in a first region of axial extent which reaches up to the position of the web, **in that**, starting from the other axial side of the web (34) to be formed, in a second region of axial extent, the ply of the first layer is closed in the axial direction by helically winding on a ribbon-shaped rubber strip of the first rubber material, with a number of turns arranged axially next to one another or at least partly axially overlapping about the axis of rotation up to the ply already formed for the first layer in the first region of axial extent, whereupon, on reaching the ply formed for the first layer in the region of axial extent, the ribbon-shaped rubber strip is further wound in contact with the axial end face firstly of the ply formed for the first layer in the first region of extent and then of the second layer, using a number of turns to form the web in a helical or spiral manner radially outward about the axis of rotation up to the envelope of the tread rubber to be built up, and **in that**, in the second region of axial extent, the second layer of the second rubber material is built up axially up to the web (34).

2. Method for producing a tread rubber for a vehicle tire according to the features of Claim 1, wherein the ply of the first layer is built up in the first axial region of extent by helically winding on a ribbon-shaped rubber strip of the first rubber material with a number of turns arranged axially next to one another or at least partly axially overlapping about the axis of rotation.

3. Method for producing a tread rubber for a vehicle tire according to the features of Claim 1 or 2, wherein the second layer is also built up in the first region of axial extent by helically winding on a ribbon-shaped rubber strip of the first rubber material with a number of turns arranged axially next to one another or at least partly axially overlapping about the axis of rotation.

4. Method for producing a tread rubber for a vehicle tire according to the features of one or more of the preceding claims, wherein the second layer is also built up in the second region of axial extent by helically winding on a ribbon-shaped rubber strip of the first rubber material with a number of turns arranged axially next to one another or at least partly axially overlapping about the axis of rotation.

5. Method for producing a tread rubber for a vehicle tire according to the features of one or more of the preceding claims, wherein the ply of the first layer, on which the second layer is built up, is the radially outer ply of a multi-ply - in particular two-ply - first layer of the first rubber material, wherein in particular the ply of the first layer that is formed radially inside the radially outer ply is built up by helically winding on the ribbon-shaped rubber strip of the first rubber material with a number of turns arranged axially next to one another or at least partly axially overlapping about the axis of rotation and after that the radially outer ply in the first axial region of extent.

6. Tread rubber of a vehicle tire - in particular a pneumatic vehicle tire - with a radially inner layer (32) of a first rubber material and a radially outer second layer (33) of a second rubber material, forming the ground-contact surface of the pneumatic tire, wherein the first rubber material has in particular a higher electrical conductivity than the second rubber material, and wherein the first rubber material extends radially outward through the second layer (33) up to the ground-contact surface in the form of a web (34) that is made to extend over the circumference of the pneumatic tire and axially divides the second layer, **characterized in that** a ply of the first layer of a first rubber material and the second layer of a second rubber material are built up radially one on top of the other, on one of the two axial sides of the web (34), in each case in a first region of axial extent which reaches up to the position of the web (34), and **in that**, starting from the other axial side of the web (34), in a second region of axial extent, an uninterrupted, ribbon-shaped rubber strip of the first rubber material is made to extend helically with a number of turns arranged axially next to one another or at least partly axially overlapping about the axis of rotation of the vehicle tire up to the ply already formed for the first layer in the first region of axial extent, whereby the ply of the first layer is formed such that it is closed in the axial direction, and in interrupted continuation of the strip-shaped rubber strip from the inside outward in the radial sense, in contact with the axial end face of the ply formed for the first layer in the first region of extent and of the second layer, the web is formed using a number of helically and/or spirally formed turns of the ribbon-shaped rubber strip about the axis of rotation of the pneumatic vehicle tire.

## Revendications

1. Procédé de fabrication d'une bande de roulement pour un bandage de roue de véhicule, en particulier un bandage pneumatique de roue de véhicule, et qui présente une couche radialement intérieure constituée d'un premier matériau de caoutchouc et une deuxième couche radialement extérieure en un deuxième matériau de caoutchouc qui forme la surface de contact du bandage pneumatique pour roue de véhicule avec le sol,
le premier matériau de caoutchouc présentant en particulier une conductivité électrique plus élevée que le deuxième matériau de caoutchouc et le premier matériau de caoutchouc, qui présente la forme d'une nervure qui s'étend sur la périphérie du bandage pneumatique pour roue de véhicule et qui divise axialement la deuxième couche, s'étendant vers l'extérieur à travers la deuxième couche jusqu'à la surface de contact avec le sol,
**caractérisé en ce que**
sur un des deux côtés axiaux de la nervure (34) à former, la première couche en un premier matériau de caoutchouc et la deuxième couche en un deuxième matériau de caoutchouc sont montées radialement l'une au-dessus de l'autre sur une surface de montage symétrique en rotation, chacune dans une première partie d'extension axiale qui va jusqu'à la position de la nervure,
**en ce que** sur l'autre côté axial de la nervure (34) à former, sur une deuxième partie d'extension axiale, la deuxième couche est fermée en direction axiale en enroulant en hélice une bande de caoutchouc en forme de ruban en le premier matériau de caoutchouc, en plusieurs enroulements disposés axialement les uns à côté des autres ou superposés axialement au moins en partie autour de l'axe de rotation jusqu'à la première couche formée dans la première partie d'extension axiale,
**en ce que** lorsque la première couche formée dans la partie d'extension axiale est atteinte, la bande de caoutchouc en forme de ruban de nouveau en contact avec la surface frontale axiale est enroulée en formant d'abord plusieurs enroulements de la première couche formée dans la première partie d'extension et ensuite de la deuxième couche, pour former la nervure en en hélice autour de l'axe de rotation, radialement vers l'extérieur jusqu'à l'enveloppante de la bande de roulement à former, et
**en ce qu'**ensuite, la deuxième couche en le deuxième matériau de caoutchouc est formée axialement dans la deuxième partie d'extension axiale jusqu'à la nervure (34).

2. Procédé de fabrication d'une bande de roulement pour un bandage de roue de véhicule selon les caractéristiques de la revendication 1, dans lequel la première couche est formée dans la première partie d'extension axiale en enroulant en hélice autour de l'axe de rotation une bande de caoutchouc en forme de ruban en le premier matériau de caoutchouc, en plusieurs enroulements disposés axialement les uns à côté des autres ou superposés axialement au moins en partie.

3. Procédé de fabrication d'une bande de roulement pour un bandage de roue de véhicule selon les caractéristiques des revendications 1 ou 2, dans lequel dans la première partie d'extension axiale, la deuxième couche est également formée en enroulant en hélice autour de l'axe de rotation une bande de caoutchouc en forme de ruban en le premier matériau de caoutchouc, en plusieurs enroulements disposés axialement les uns à côté des autres ou superposés axialement au moins en partie.

4. Procédé de fabrication d'une bande de roulement pour un bandage de roue de véhicule selon les caractéristiques d'une ou plusieurs des revendications précédentes, dans lequel dans la deuxième partie d'extension axiale, la deuxième couche est également formée en enroulant en hélice autour de l'axe de rotation une bande de caoutchouc en forme de ruban en le premier matériau de caoutchouc, en plusieurs enroulements disposés axialement les uns à côté des autres ou superposés axialement au moins en partie.

5. Procédé de fabrication d'une bande de roulement pour un bandage de roue de véhicule selon les caractéristiques d'une ou plusieurs des revendications précédentes, dans lequel la première couche sur laquelle la deuxième couche est formée forme la première couche radialement extérieure en plusieurs strates et en particulier en deux strates du premier matériau de caoutchouc, la première couche formée radialement à l'intérieur de la couche radialement extérieure étant formée en enroulant en hélice autour de l'axe de rotation la bande de caoutchouc en forme de ruban en le premier matériau de caoutchouc en plusieurs enroulements disposés axialement les uns à côté des autres ou superposés axialement au moins en partie, la couche radialement extérieure étant ensuite formée dans la première partie d'extension axiale.

6. Bande de roulement d'un bandage pour roue de véhicule et en particulier d'un bandage pneumatique pour roue de véhicule, et qui présente une couche radialement intérieure (32) constituée d'un premier matériau de caoutchouc et une deuxième couche radialement extérieure (33) en un deuxième matériau de caoutchouc qui forme la surface de contact du bandage pneumatique pour roue de véhicule avec le sol,
le premier matériau de caoutchouc présentant en particulier une conductivité électrique plus élevée que le deuxième matériau de caoutchouc et le premier matériau de caoutchouc, qui présente la forme d'une nervure (34) qui s'étend sur la périphérie du bandage pneumatique pour roue de véhicule et qui divise axialement la deuxième couche (33), s'étendant vers l'extérieur à travers la deuxième couche jusqu'à la surface de contact avec le sol,
**caractérisée en ce que**
sur un des deux côtés axiaux de la nervure (34), une première couche en le premier matériau de caoutchouc et la deuxième couche en un deuxième matériau de caoutchouc sont toutes deux formées radialement l'une au-dessus de l'autre dans une première partie d'extension axiale qui s'étend jusqu'à la position de la nervure (34),
**en ce que** par l'autre côté axial de la nervure (34), dans une deuxième partie d'extension axiale, une bande de caoutchouc ininterrompue en forme de ruban en le premier matériau de caoutchouc est étendue en hélice autour de l'axe de rotation du bandage pour roue de véhicule, en plusieurs enroulements disposés axialement les uns à côté des autres ou superposés axialement au moins en partie, jusqu'à la première couche déjà formée dans la première partie d'extension axiale, suite à quoi la première couche est fermée dans la direction axiale, la nervure (34) est formée par prolongement ininterrompu de la bande de caoutchouc en forme de ruban du côté radialement intérieur jusqu'à côté radialement extérieur, en contact avec la surface frontale axiale de la première couche et de la deuxième couche formées dans la première partie d'extension, en posant en hélice et/ou en spirale autour de l'axe de rotation plusieurs enroulements de la bande de caoutchouc en forme de ruban du bandage pneumatique pour roue de véhicule.
